# EUROPEAN PATENT APPLICATION

(11) **EP 4 527 712 A1**
(43) Date of publication of application: **26.03.2025**
(21) Application number: 23306580.4
(22) Date of filing: 22.09.2023
(51) Int. Cl.: B61D 37/00, A61G 3/08, B60R 22/00

(54) **DEVICE FOR IMMOBILIZING A WHEELCHAIR NEXT TO A SEAT OF A PASSENGER VEHICLE**

(71) Applicant: SpeedInnov, 75008 Paris (FR)
(72) Inventor: COURCIMEAUX, Eric, 17139 DOMPIERRE SUR MER (FR); PRUNIER, Germain, 17180 PERIGNY (FR)
(74) Representative: Lavoix

(57) **Abstract**

The invention concerns a device (10) for immobilizing a wheelchair (12) next to a seat (14) of a passenger vehicle (16), comprising:
- a base (18) comprising:
- a first zone (Z₁) corresponding to a fixing area of the seat leg (22);
- a second zone (Z₂) corresponding to a fixing area of a vertical part (24);
- a third distal zone (Z₃) configured to receive the bottom of one wheelchair wheel (26) and presenting a predetermined shape configured to hinder forward or backward motion of said wheelchair wheel;

- said vertical part being topped by a handle (28) linked to said vertical part by two elastic elements (32), and with a hook (30) configured to hinder lateral motion of said wheelchair wheel (26) by hooking over its handrail (34) and under its wheel rim (36).

## Description

The present invention concerns a device for immobilizing a wheelchair next to a seat of a passenger vehicle.

The present invention also relates to a corresponding passenger vehicle, such as a public transportation vehicle.

The disclosure relates to passenger vehicles, such as railway vehicles, providing accessibility for persons with reduced mobility, and especially for wheelchair users.

Currently, when a wheelchair user boards the passenger vehicle, he returns to his seat and then moves from his wheelchair to a passenger seat of said passenger vehicle. When there is an accompanying person, this accompanying person can store said wheelchair in a dedicated zone, but when the wheelchair user is alone, he has to put the wheelchair away by himself while resting on his passenger seat.

For this, a solution of the prior art consists in providing, next to the passenger seat, a stud with a safety belt able to imprison said wheelchair. More precisely, said stud comprises a vertical leg extending substantially from the passenger vehicle floor up to the seat base. An L-shaped part is attached to the upper end of this vertical leg, wherein the long arm of said L-shaped part runs parallel to the seat depth and wherein the short arm runs parallel to the seat width towards the corridor of the passenger vehicle. Said short arm comprises at its distal end, with respect to the seat of the vehicle, the safety belt retractor, while said long arm comprises at its distal end, with respect to the short arm the safety belt closure clip. To imprison the wheelchair, the safety belt starts from the wheelchair back, extends towards the corridor of the passenger vehicle, goes under the distal wheelchair armrest, with respect to the seat of the vehicle, and crosses said wheelchair until the safety belt closure clip.

The resulting wheelchair wrapping and the safety belt route until the safety belt closure clip are not ergonomic. Indeed, the safety belt retractor is often a long way back of the passenger seat and the wheelchair structure and back make difficult to hold the safety belt buckle. In addition, with this system of the prior art, there is too much distance between the safety belt retractor, along the safety belt route, until the safety belt closure, to lock the safety belt easily for someone sitting in the adjacent passenger seat. Moreover, said system of the prior art is very prominent and not very integrated in terms of design.

In addition, in some passenger vehicle layout, the dedicated zone to store wheelchair next to the passenger seat is reduced, a compact solution is thus needed.

The present invention aims to solve the above-mentioned problems. For this purpose, the invention relates to a device for immobilizing a wheelchair next to a seat of a passenger vehicle wherein said device comprises:
- a base configured to rest on the floor of said vehicle, said base comprising, according to a transversal direction collinear to the seat width, three zones:
   - a first proximal zone, with respect to the seat of the vehicle, said first proximal zone corresponding to a fixing area of the seat leg;
   - a second intermediate zone corresponding to a fixing area of a vertical part raising vertically from said base;
   - a third distal zone, with respect to the seat of the vehicle, said third distal zone being configured to receive the bottom of one wheelchair wheel and presenting a predetermined shape configured to hinder forward or backward motion of said wheelchair wheel according to a longitudinal direction collinear to the seat depth;
- said vertical part being topped, vertically opposite to said base, by a handle with a hook, said handle being linked to said vertical part by two elastic elements arranged at each longitudinal end of said handle, the upper extremity of each elastic element being elastically held inside said handle, the lower extremity of each elastic element being elastically held inside said vertical part, said hook being configured to hinder lateral motion of said wheelchair wheel according to said transversal direction, and presenting:
   - a proximal hook portion, with respect to the handle, configured to hook over a handrail associated to said wheelchair wheel, and
   - a distal hook portion, with respect to the handle, configured to hook under the wheel rim of said wheelchair wheel.

In other words, said device proposed according to the present disclosure provides a stowage arrangement with improved ergonomics and ease of holding the wheelchair in its stowed position.

Indeed, advantageously, said device proposed according to the present disclosure, can be handled with one hand to pass other the wheelchair proximal wheel, with respect to the seat passenger, and hold it as closed as possible of the passenger seat, pressed against the vertical part.

More precisely, the arrangement comprises a raised floor structure (i.e. the vertical part), and a handle linked by elastic elements to the vertical part of said raised floor structure. Said handle is provided with a hook which hooks over the handrail to prevent lateral movement (or lateral tilt) of the wheelchair thanks to the restoring force of each of said two elastic elements, and which can locate over the top of the hand ring (i.e. handrail), and with a portion of which can hook under the wheel rim to prevent separation between the wheelchair wheel and the raised floor structure.

Advantageously, said device comprises also in its base, resting on the floor, a predetermined shape configured to hinder forward or backward motion of said wheelchair wheel according to a longitudinal direction collinear to the seat depth, for example during braking or acceleration phases of the passenger vehicle, considering for example that the seat depth direction is collinear to the travel direction of the passenger vehicle.

Thus, the resulting provided immobilization of the wheelchair, in the passenger vehicle such as a railway vehicle, is optimal because it is both lateral and longitudinal.

In addition, said device proposed according to the present disclosure more easily allows the wheelchair user, sitting in the passenger seat next to the wheelchair, to engage the top of the closest wheelchair wheel without having to reach far from the passenger seat or making fiddly hooking connections through the wheelchair frame.

In other words, the present invention avoids the disadvantages associated with using a safety belt to fix a wheelchair, such as a foldable wheelchair, next to the passenger seat in the passenger vehicle and provides a more compact and homogeneous solution which fits in better with the passenger room of the passenger vehicle.

According to particular embodiments, the device for immobilizing a wheelchair next to a seat of a passenger vehicle comprises one or more of the following characteristics, taken separately or in any technically feasible combination:
- said first proximal zone of said base comprises openings, said openings being configured to allow fastening means of said seat leg to pass through until to be fixed to the floor;
- the position of said second intermediate zone, corresponding to a fixing area of said vertical part raising vertically from said base with respect to said seat, and the dimensions of said vertical part are compatible with the up or down motion of the seat armrest;
- said predetermined shape of said third distal zone corresponds to a sole, said sole comprising a lateral vertical restraint opposite to said vertical part according to the transversal direction and two front and rear vertical restraints at each end of the third distal zone according to the longitudinal direction;
- said lateral vertical restraint and said front and rear vertical restraints raise vertically from the base with an angle whose value α is 90°< α < 150°;
- the restoring force of each of said two elastic elements is between 20 and 60 Newton;
- each of said two elastic elements is an elastic thread comprising at each of its extremities a tilting tip, and said handle comprises, at each handle longitudinal end according to said longitudinal direction, one opening, to allow said elastic thread to pass through towards the vertical part, and whose shape is also configured to house, inside said handle, the tilting tip of the upper extremity of one of said two elastic elements, in a predetermined retaining position wherein said tilting tip forms an angle with said elastic thread and is bottom restraint inside the handle by the hook fixed to the handle and forming the handle base;
- said vertical part comprises on its upper face two through-openings respectively associated to said two elastic elements, each through-openings being configured to guide the elastic thread of its associated elastic element vertically inside said vertical part until a retaining element presenting substantially an S-shape with three vertical restraint levels of the tilting tip of the lower extremity of the elastic element, said three restraint levels being vertically located at three different heights with respect to the floor;
- said vertical part comprises, according to said transversal direction, with respect to the seat of the vehicle, a distal removable wall, said removable wall comprising on its external face fastening lines for two half-cylinder bumpers configured to be in contact with the handrail of the wheelchair;
- said hook is rilsanized;
- said hook comprises two flat hook legs or two hook legs with an S-shape according to said transversal direction, each leg comprising:
   - said proximal hook portion, with respect to the handle, configured to hook over a handrail associated to said wheelchair wheel, and
   - said distal hook portion, with respect to the handle, configured to hook under the wheel rim of said wheelchair wheel.
- said two hook legs are inclined with respect to each other to follow substantially the curvature of the wheelchair wheel, the value of the angle between the extremities of the two legs in relation to the centre of the wheelchair wheel being substantially comprised between 140° and 160°.
- each of said two hook legs presents a width, according to the longitudinal direction, substantially equal to 15 mm.

The invention also relates to a passenger vehicle as such, said passenger vehicle comprising at least one of said device for immobilizing a wheelchair next to a seat of said passenger vehicle, as previously described.

The invention and its advantages will be better understood upon reading the following detailed description of a particular embodiment, given solely by way of a non-limiting example, wherein this description is made with reference to the appended drawings, wherein:
- Figures 1 and 2 are a schematic view of a set formed by the passenger seat of the passenger vehicle and the device for immobilizing a wheelchair next to said passenger, according to the present disclosure, with and without said wheelchair;
- Figure 3 is an exploded view illustrating the fixing of said passenger seat to the floor over a dedicated zone of the device for immobilizing a wheelchair next to said passenger according to the present disclosure;
- Figure 4 is a vertical cross-sectional view of the vertical part of the device for immobilizing a wheelchair next to said passenger according to the present disclosure;
- Figures 5 is a schematic view illustrating two positions of the hook of the device for immobilizing a wheelchair next to said passenger according to the present disclosure, in the presence of said wheelchair;
- Figure 6 is a side view of the two positions of the hook illustrated by figure 5 and for two different embodiments of the hook shape.

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

The expression "substantially equal to" is understood hereinafter as an equality at plus or minus 10% and preferably at plus or minus 5%.

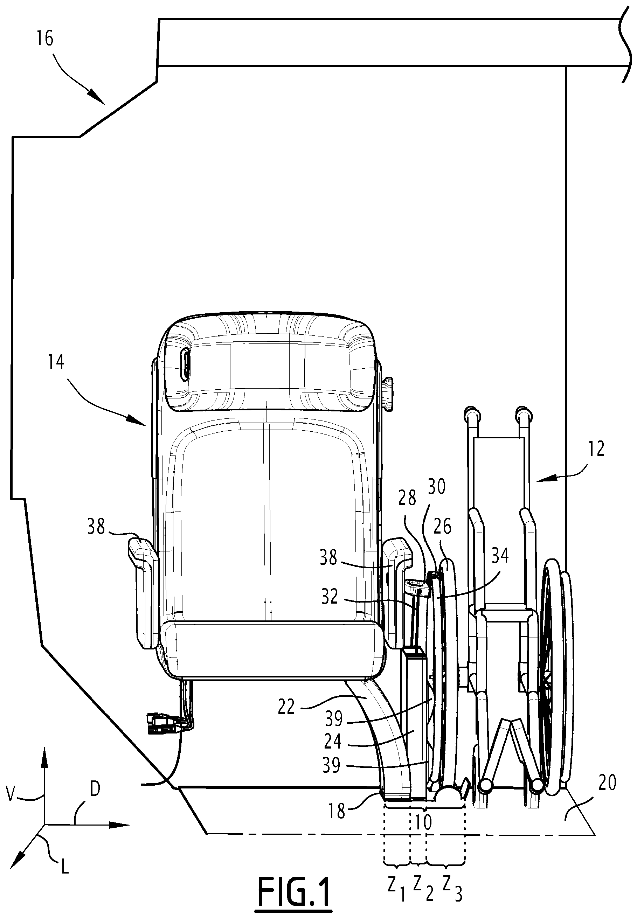

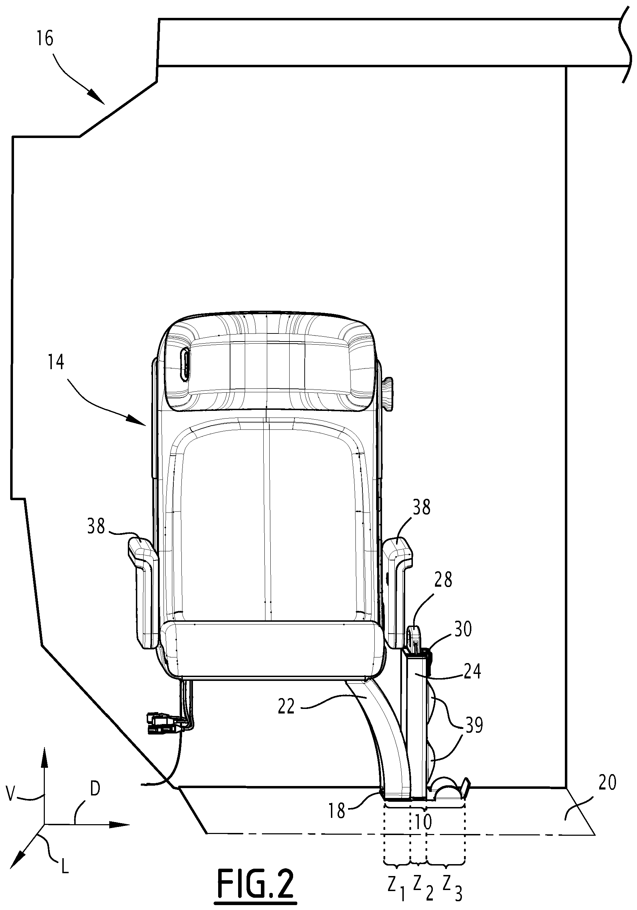

In figures 1 and 2, the device 10 for immobilizing a wheelchair 12 next to said passenger according to the present invention is represented when currently immobilizing said wheelchair 12, and for example a foldable wheelchair 12 as illustrated by figure 1, next to a passenger seat 14 of a passenger vehicle 16, such as a railway vehicle, and respectively without said foldable wheelchair, said device being consequently in a resting position.

More precisely, according to the present disclosure, said device 10 comprises first a base 18 configured to rest on the floor 20 of said passenger vehicle 16.

Said base 18 comprises, according to a transversal direction D collinear to the passenger seat 14 width, three different zones. A first proximal zone Z₁ of said base, with respect to the seat 14 of the passenger vehicle 16, corresponds to a fixing area of the seat leg 22.

A second intermediate zone Z₂ of said base 18 corresponds to a fixing area of a vertical part 24 (also called a raising structure) raising vertically from said base 18.

A third distal zone Z₃ of said base 18, with respect to the seat 14 of the vehicle 16, is configured to receive the bottom of one wheelchair wheel 26 and presents a predetermined shape (also called a "trough" or "sole") configured to hinder forward and backward motion of said wheelchair wheel 26 according to a longitudinal direction L collinear to the seat depth.

In addition, said vertical part 24 is topped, vertically opposite to said base 18, by a handle 28 with a hook 30. Said handle 28 is linked to said vertical part 24 by two elastic elements 32 arranged at each longitudinal end of said handle 28, the upper extremity of each elastic element 32 being elastically held inside said handle 28, the lower extremity of each elastic element 32 being elastically held inside said vertical part 24.

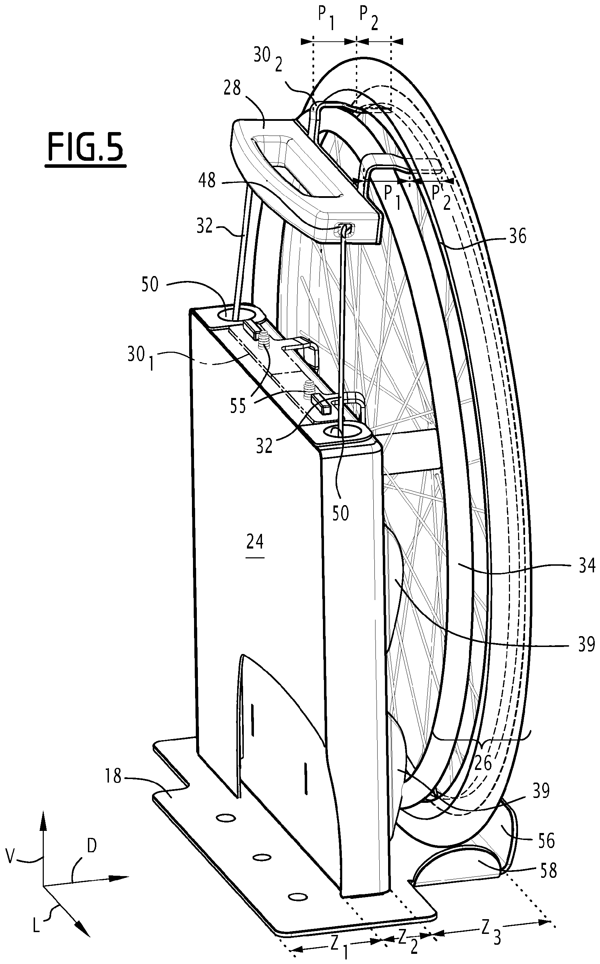

Said hook 30 is configured to hinder lateral motion of said wheelchair wheel 26 according to said transversal direction D. Said hook 30 presents a proximal hook portion P₁, with respect to the handle 28, configured to hook over a handrail 34 associated to said wheelchair wheel 26, and a distal hook portion P₂, with respect to the handle 28, configured to hook under the wheel rim 36 of said wheelchair wheel 26 as illustrated later by figure 5.

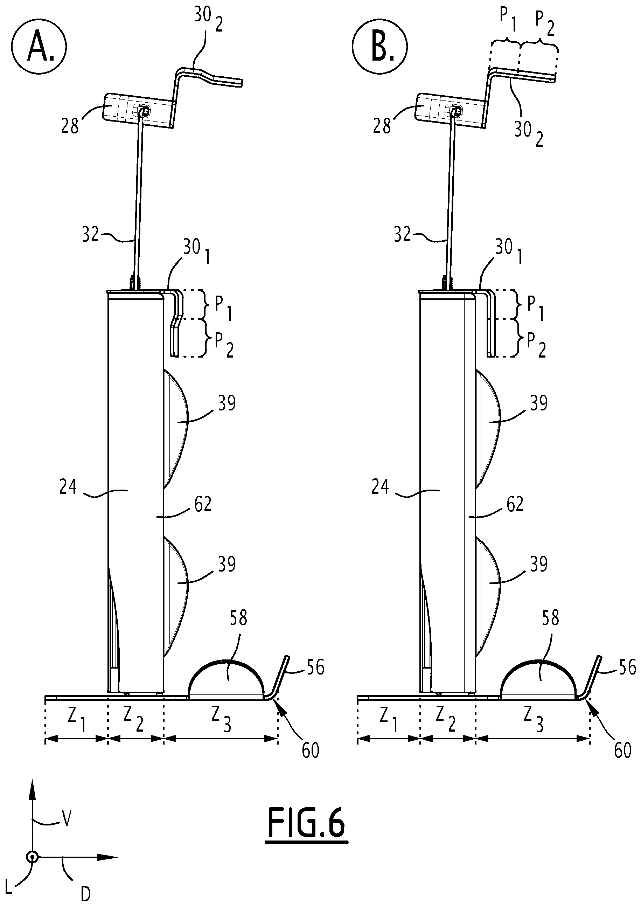

As can be seen by comparing figure 1 and figure 2 corresponding respectively to schematic view with and without said wheelchair 12 and as described later in relation with figures 5 and 6, the handle 28 with the hook 30 is first moved according to a vertical extension according to the vertical direction V, and then rotate according to the longitudinal axis L, with an angle comprised between 60 and 90°, when passing from the state without a wheelchair to hook, to the "hookstate" wherein the wheelchair 12 is hooked by said hook 30 according to an anticlockwise direction (i.e. with a complementary angle between 90 and 120° when passing from the state without a wheelchair to hook, to the "hookstate" wherein the wheelchair 12 is hooked by said hook 30 according to a clockwise direction). Said angle value depends on the hook shape (flat or with a S-shape as detailed in the following), and/or on the wheel size of the wheelchair.

As an optional extra, the restoring force of each of said two elastic elements 32 is between 20 and 60 Newton.

As another optional extra, as illustrated by figures 1 and 2, said second intermediate zone Z₂, corresponding to a fixing area of said vertical part 24 raising vertically from said base 18 with respect to said seat 14, and the dimensions of said vertical part 24 are compatible with the up or down motion of the seat armrest 38.

In other words, according to said optional extra, said vertical part 24 is laid out and has predetermined dimensions so that it does not impede the mobility of the seat armrest 38. Consequently, the armrest can be raised without hindrance to permit the moving of the wheelchair user from the wheelchair 12 to the passenger seat 14 of the vehicle 16.

As another optional extra, as illustrated by figures 1 and 2, and as described later in relation with figures 5 and 6, the distal wall of said vertical part 24, with respect to the seat 14 according to said transversal direction D, comprises on its external face fastening lines for two half-cylinder bumpers 39 configured to be in contact with the handrail 34 of the wheelchair 12, and for example made of rubber. Such bumpers 39 avoid damaging the vertical part 24 such as the handrail 34 of the wheelchair 12. In addition, the upper bumper 39 is also configured to protect the wheel spokes.

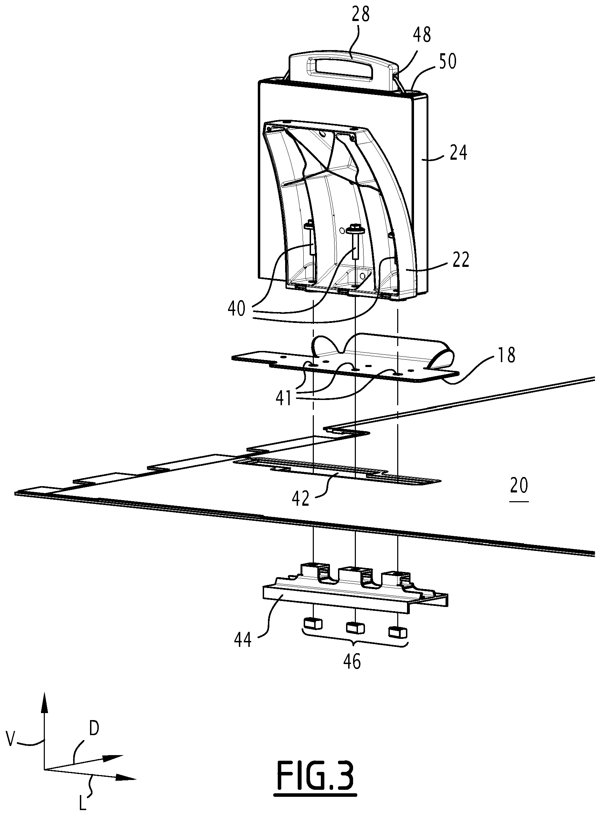

Figure 3 is an exploded view, according to the vertical direction V, illustrating the fixing of said passenger seat 14 to the floor 20 over said dedicated zone Z₁ of the device 10 for immobilizing a wheelchair next to said passenger according to the present disclosure.

More precisely, according to an optional extra, said first proximal zone Z₁ of said base 18 comprises openings 41, said openings 41 being configured to allow fastening means 40, such as screws, of said seat leg 22 to pass through until to be fixed to the floor 20. In addition, countersunk screws link the vertical part 24 to the base 18.

In other words, the base 18 is not fixed as such to the floor 20, but advantageously comprises openings 41, which allow the fastening means 40 of the seat leg 22 as such passing through. Consequently, once said seat leg 22 is fixed to the floor 20 by said fastening means 40 passing though the openings 41 of said base 18, said base 18 cannot move anymore.

As illustrated by the embodiment of figure 3, said fastening means 40, after passing through the openings 41 of the base 18, pass also through an opening 42 of the floor 20 until to be received by a dedicated receiver 44 located under the floor and fixed by locking means 46 such as bolts.

As an optional extra, as illustrated by figures 3 to 5, said handle 28 comprises, at each handle longitudinal end according to said longitudinal direction L, one opening 48, to allow the elastic thread of said elastic element to pass through towards the vertical part 24, and said vertical part 24 comprises on its upper face, two through-openings 50 respectively associated to said two elastic elements 32. According to an example said through-openings 50 present a trumpet shape.

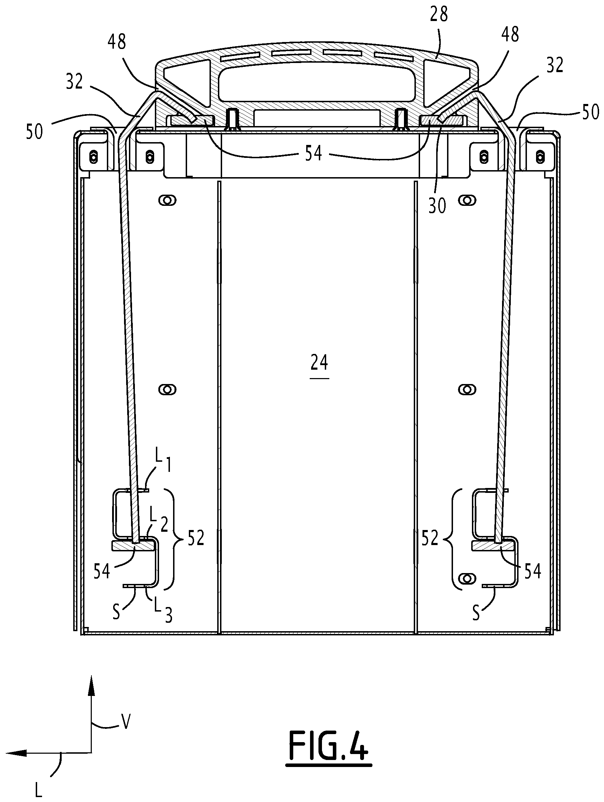

These two openings 48 and 50 are illustrated in more details in figure 4, which is a vertical cross-sectional view of the vertical part of the device for immobilizing a wheelchair next to said passenger according to the present disclosure.

More precisely, according to the embodiment of said figure 4, each of said two elastic elements 32 is an elastic thread comprising at each of its extremities a tilting tip 54.

Moreover, as already indicated in relation with the embodiment of figure 3, said handle 28 comprises, at each handle longitudinal end according to said longitudinal direction L, one opening 48, to allow said elastic thread to pass through, towards the vertical part 24.

As an optional extra, the shape of each opening 48 of said handle 28, is also configured to house, inside said handle 28, the tilting tip 54 of the upper extremity of one of said two elastic elements 32, in a predetermined retaining position wherein said tilting tip forms an angle with said elastic thread and is bottom restraint inside the handle by the hook 30 fixed to the handle 28 and forming the handle base.

In other words, said hook 30 performs three functions: forming the base of the handle 28, preventing the elastic element from coming off the base of the handle and preventing the wheelchair wheel 26 from moving when being in the "hookstate" position as illustrated by figure 1.

As another optional extra each through-openings 50 of the upper face of said vertical part 24, is configured to guide the elastic thread of its associated elastic element 32 vertically inside said vertical part 24 until a retaining element 52 presenting substantially an S-shape with three restraint levels L₁, L₂, L₃ of a tilting tip 54 of the lower extremity of the elastic element 32, said three restraint levels being vertically located at three different heights with respect to the floor 20. Each longitudinal restraint level L₁, L₂, L₃ (i.e. a level according to said longitudinal direction L) of said retaining element 52 comprises a slot S (i.e. a notch), which allows the elastic thread to pass through and retain the tilting tip 54 under said level. Said three restraint levels L₁, L₂, L₃ permit to adapt the elastic elements 32 restoring force as a function of the initial stiffness, or as use progresses if the elastic relaxes as a result of ageing, during a maintenance stage of the passenger vehicle 16.

Indeed, it has to be noted that each elastic element 32 must be slightly pretensioned.

Figure 5 is a schematic view illustrating two positions 30₁ and 30₂ of the hook of the device 10 for immobilizing a wheelchair next to said passenger according to the present disclosure, in the presence of said wheelchair.

In the absence of wheelchair, the position 30₁ of the hook is also illustrated by figure 2 as previously described and illustrating the state without a wheelchair to hook.

It has to be noted, that for simplicity, in said figure 5, the handled 28 is not represented in the position 30₁ of the hook, but is always present and fixed to said hook 30, for example by screws 55 as illustrated by figure 5, said hook 30 forming the base of said handle and permitting to restraint, inside said handle 28, the tilting tip 54 of the upper extremity of each elastic element 32 as illustrated in figure 4.

The position 30₂ of the hook corresponds to the "hookstate" as also illustrated previously by figure 1 wherein the hook 30 hinders lateral motion of the wheelchair 26.

As an optional extra, according to the embodiment of figure 5, said hook 30 comprises two legs with an S-shape according to said transversal direction D, each leg comprising a proximal hook portion P₁, with respect to the handle 28, configured to hook over a handrail 34 associated to said wheelchair wheel 26, and a distal hook portion P₂, with respect to the handle 28, configured to hook under the wheel rim 36 of said wheelchair wheel 26.

In particular, as illustrated by the embodiment of figure 5, said two hook legs are inclined with respect to each other to follow substantially the curvature of the wheelchair wheel 26, the value of the angle between the extremities of the two hook legs in relation to the centre of the wheelchair wheel 26 being substantially comprised between 140° and 160°.

As another optional extra, each of said two hook legs presents a width, according to the longitudinal direction L, substantially equal to 15 mm, allowing it to pass between two wheelchair spokes.

As an optional extra, said hook 30 is rilsanized, that is to say a polymer deposition on a metal part of said hook is performed to make it less aggressive towards the wheel, and avoid damaging its rim 36 and its handrail 34.

According to another optional extra, as illustrated by figures 5 and 6, said predetermined shape of said third distal zone Z₃ of the base 18 corresponds to a sole (also called a trough), said sole comprising a lateral vertical restraint 56 opposite to said vertical part 24 according to the transversal direction D and two front and rear vertical restraints 58 at each end of the third distal zone Z₃ according to the longitudinal direction L of said vehicle 16. Said predetermined shape is consequently configured to hinder forward or backward motion of said wheelchair wheel 26 according to said longitudinal direction L collinear to the seat depth, for example during braking or acceleration phases of the passenger vehicle, considering for example that the seat depth longitudinal direction L is collinear to the travel direction of the passenger vehicle 16.

Figure 6 is a side view of the two positions 30₁ and 30₂ of the hook illustrated by figure 5 and for two different embodiments A and B of the hook shape.

Indeed, in figure 6, according to the A embodiment, the two hook legs presents an S-shape while in the B embodiment, the two hook legs are flat.

In addition, in this side view of figure 6, according to another optional extra as a complement to the figure 5 embodiment, it can be seen in the base 18 that said lateral vertical restraint 56 and said front and rear vertical restraints 58 raise vertically from the base 18 with an angle 60 whose value α is 90°< α < 150°. In other words, said lateral vertical restraint 56 and said front and rear vertical restraints 58 present advantageously « broken angles » 60, which avoid damaging the tyre 26 of the wheelchair 12 and permit a better adhesion of the paint on the base 18 and better paint. In other words, said "broken angles" are only to hinder forward or backward motion of wheelchair wheel, for providing tyre protection and also for painting issues.

Moreover, as already introduced previously in relation with figures 1 and 2, said vertical part 24 comprises according to said transversal direction D, with respect to the seat 14 of the vehicle, a distal removable wall 62, said removable wall 62 comprising on its external face fastening lines for two half-cylinder bumpers 39 configured to be in contact with the handrail 34 of the wheelchair 12. Such bumpers 39 avoid damaging the vertical part 24 such as the handrail and the spokes 34 of the wheelchair 12.

In other words, said removable wall 62 is a covering of said vertical part 24, and can be advantageously removed to place the elastic elements 32 in the associated openings 48 and 50 of the handle 28 and the vertical part 24 respectively as previously described in relation with figure 4 during an installation phase, or to replace elastic elements 32 or to adapt their restoring force as a function of the initial stiffness, or as use progresses if at least one of the elastic elements relaxes as a result of ageing, during a maintenance stage of the passenger vehicle 16.

According to an optional embodiment, when placing each elastic element 32, said removable wall 62 being removed from the vertical part 24, it has to be noted that, as previously illustrated by figure 4, the tilting tip 54 of the upper extremity of each of said two elastic elements 32 is first installed in the opening 48 of the handle 28 and blocked by the hook part 30, and then the tilting tip 54 of the lower extremity is fixed along the vertical part 24 thanks to the retaining element 52. Once each elastic element 32 is placed, said removable wall 62 is attached to the vertical part 24, which is consequently closed by said removable wall 62.

The one skilled in the art will understand that the disclosure is not limited to the embodiments described, nor to the particular examples of the specification, the above-mentioned embodiments and variants being suitable for being combined with each other to generate new embodiments of the disclosure.

Thanks to the invention, a solution for immobilizing a wheelchair next to a passenger seat of a passenger vehicle is provided and permits to ensure efficiently said immobilization both laterally and longitudinally in a reduced environment and in a simplified way.

## Claims

1. Device (10) for immobilizing a wheelchair (12) next to a seat (14) of a passenger vehicle (16), said device being **characterized in that** it comprises:
- a base (18) configured to rest on the floor (20) of said vehicle (16), said base (18) comprising, according to a transversal direction (D) collinear to the seat width, three zones:
- a first proximal zone (Z₁), with respect to the seat of the vehicle, said first proximal zone corresponding to a fixing area of the seat leg (22);
- a second intermediate zone (Z₂) corresponding to a fixing area of a vertical part (24) raising vertically from said base (18);
- a third distal zone (Z₃), with respect to the seat (14) of the vehicle (16), said third distal zone (Z₃) being configured to receive the bottom of one wheelchair wheel (26) and presenting a predetermined shape configured to hinder forward or backward motion of said wheelchair wheel (26) according to a longitudinal direction (L) collinear to the seat depth;
- said vertical part (24) being topped, vertically opposite to said base (18), by a handle (28) with a hook (30), said handle (28) being linked to said vertical part (24) by two elastic elements (32) arranged at each longitudinal end of said handle (28), the upper extremity of each elastic element (32) being elastically held inside said handle (28), the lower extremity of each elastic element (32) being elastically held inside said vertical part (24), said hook (30) being configured to hinder lateral motion of said wheelchair wheel (26) according to said transversal direction (D), and presenting:
- a proximal hook portion (P₁), with respect to the handle (28), configured to hook over a handrail (34) associated to said wheelchair wheel, and
- a distal hook portion (P₂), with respect to the handle (28), configured to hook under the wheel rim (36) of said wheelchair wheel.

2. Device according to claim 1, wherein said first proximal zone (Z₁) of said base (18) comprises openings (41), said openings (41) being configured to allow fastening means (40) of said seat leg (22) to pass through until to be fixed to the floor (20).

3. Device according to claim 1 or 2, wherein the position of said second intermediate zone (Z₂), corresponding to a fixing area of said vertical part (24) raising vertically from said base (18) with respect to said seat (14), and the dimensions of said vertical part (24) are compatible with the up or down motion of the seat armrest (38).

4. Device according to anyone of the preceding claims, wherein said predetermined shape of said third distal zone (Z₃) corresponds to a sole, said sole comprising a lateral vertical restraint (56) opposite to said vertical part (24) according to the transversal direction (D) and two front and rear vertical restraints (58) at each end of the third distal zone (Z₃) according to the longitudinal direction (L).

5. Device according to claim 4, wherein said lateral vertical restraint (56) and said front and rear vertical restraints (58) raise vertically from the base (18) with an angle (60) whose value α is 90°< α < 150°.

6. Device according to anyone of the preceding claims, wherein the restoring force of each of said two elastic elements (32) is between 20 and 60 Newton.

7. Device according to anyone of the preceding claims, wherein each of said two elastic elements (32) is an elastic thread comprising at each of its extremities a tilting tip (54), and
wherein said handle (28) comprises, at each handle longitudinal end according to said longitudinal direction (L), one opening (48), to allow said elastic thread to pass through towards the vertical part (24), and whose shape is also configured to house, inside said handle (28), the tilting tip of the upper extremity of one of said two elastic elements (32), in a predetermined retaining position wherein said tilting tip forms an angle with said elastic thread and is bottom restraint inside the handle by the hook (30) fixed to the handle and forming the handle base.

8. Device according to claim 7, wherein said vertical part (24) comprises on its upper face two through-openings (50) respectively associated to said two elastic elements (32), each through-openings (50) being configured to guide the elastic thread of its associated elastic element (32) vertically inside said vertical part (24) until a retaining element (52) presenting substantially an S-shape with three vertical restraint levels of the tilting tip (54) of the lower extremity of the elastic element (32), said three restraint levels being vertically located at three different heights with respect to the floor (20).

9. Device according to anyone of the preceding claims, wherein said vertical part (24) comprises, according to said transversal direction (D), with respect to the seat (14) of the vehicle, a distal removable wall (62), said removable wall (62) comprising on its external face fastening lines for two half-cylinder bumpers (39) configured to be in contact with the handrail of the wheelchair.

10. Device according to anyone of the preceding claims, wherein said hook (30) is rilsanized.

11. Device according to anyone of the preceding claims, wherein said hook (30) comprises two flat hook legs or two hook legs with an S-shape according to said transversal direction (D), each leg comprising:
- said proximal hook portion (P₁), with respect to the handle (28), configured to hook over a handrail (34) associated to said wheelchair wheel, and
- said distal hook portion (P₂), with respect to the handle (28), configured to hook under the wheel rim (36) of said wheelchair wheel.

12. Device according to claim 11, wherein said two hook legs are inclined with respect to each other to follow substantially the curvature of the wheelchair wheel, the value of the angle between the extremities of the two legs in relation to the centre of the wheelchair wheel being substantially comprised between 140° and 160°.

13. Device according to claim 11 or 12, wherein each of said two hook legs presents a width, according to the longitudinal direction (L), substantially equal to 15 mm.

14. Passenger vehicle (16) **characterized in that** it comprises at least one device (10) for immobilizing a wheelchair (12) next to a seat (14) of said passenger vehicle (16) according to anyone of the preceding claims.

## Amended claims

### Amended claims in accordance with Rule 137(2) EPC.

1. Device (10) for immobilizing a wheelchair (12) next to a seat (14) of a passenger vehicle (16), said device being **characterized in that** it comprises:
- a base (18) configured to rest on the floor (20) of said vehicle (16), said base (18) comprising, according to a transversal direction (D) collinear to the seat width, three zones:
- a first proximal zone (Z₁), with respect to the seat of the vehicle, said first proximal zone corresponding to a fixing area of the seat leg (22);
- a second intermediate zone (Z₂) corresponding to a fixing area of a vertical part (24) raising vertically from said base (18);
- a third distal zone (Z₃), with respect to the seat (14) of the vehicle (16), said third distal zone (Z₃) being configured to receive the bottom of one wheelchair wheel (26) and presenting a predetermined shape configured to hinder forward or backward motion of said wheelchair wheel (26) according to a longitudinal direction (L) collinear to the seat depth;
- said vertical part (24) being topped, vertically opposite to said base (18), by a handle (28) with a hook (30), said handle (28) being linked to said vertical part (24) by two elastic elements (32) arranged at each longitudinal end of said handle (28), the upper extremity of each elastic element (32) being elastically held inside said handle (28), the lower extremity of each elastic element (32) being elastically held inside said vertical part (24), said hook (30) being configured to hinder lateral motion of said wheelchair wheel (26) according to said transversal direction (D), and presenting:
- a proximal hook portion (P₁), with respect to the handle (28), configured to hook over a handrail (34) associated to said wheelchair wheel, and
- a distal hook portion (P₂), with respect to the handle (28), configured to hook under the wheel rim (36) of said wheelchair wheel.

2. Device according to claim 1, wherein said first proximal zone (Z₁) of said base (18) comprises openings (41), said openings (41) being configured to allow fastening means (40) of said seat leg (22) to pass through until to be fixed to the floor (20).

3. Device according to claim 1 or 2, wherein the position of said second intermediate zone (Z₂), corresponding to a fixing area of said vertical part (24) raising vertically from said base (18) with respect to said seat (14), and the dimensions of said vertical part (24) are configured to be compatible with the up or down motion of the seat armrest (38).

4. Device according to anyone of the preceding claims, wherein said predetermined shape of said third distal zone (Z₃) corresponds to a sole, said sole comprising a lateral vertical restraint (56) opposite to said vertical part (24) according to the transversal direction (D) and two front and rear vertical restraints (58) at each end of the third distal zone (Z₃) according to the longitudinal direction (L).

5. Device according to claim 4, wherein said lateral vertical restraint (56) and said front and rear vertical restraints (58) raise from the base (18) with an angle (60) whose value α is 90°< α < 150°.

6. Device according to anyone of the preceding claims, wherein the restoring force of each of said two elastic elements (32) is between 20 and 60 Newton.

7. Device according to anyone of the preceding claims, wherein each of said two elastic elements (32) is an elastic thread comprising at each of its extremities a tilting tip (54), and
wherein said handle (28) comprises, at each handle longitudinal end according to said longitudinal direction (L), one opening (48), to allow said elastic thread to pass through towards the vertical part (24), and whose shape is also configured to house, inside said handle (28), the tilting tip of the upper extremity of one of said two elastic elements (32), in a predetermined retaining position wherein said tilting tip forms an angle with said elastic thread and is bottom restraint inside the handle by the hook (30) fixed to the handle and forming the handle base.

8. Device according to claim 7, wherein said vertical part (24) comprises on its upper face two through-openings (50) respectively associated to said two elastic elements (32), each through-openings (50) being configured to guide the elastic thread of its associated elastic element (32) vertically inside said vertical part (24) until a retaining element (52) presenting substantially an S-shape with three vertical restraint levels of the tilting tip (54) of the lower extremity of the elastic element (32), said three restraint levels being vertically located at three different heights with respect to the floor (20).

9. Device according to anyone of the preceding claims, wherein said vertical part (24) comprises, according to said transversal direction (D), with respect to the seat (14) of the vehicle, a distal removable wall (62), said removable wall (62) comprising on its external face fastening lines for two half-cylinder bumpers (39) configured to be in contact with the handrail of the wheelchair.

10. Device according to anyone of the preceding claims, wherein a polymer deposition on a metal part of said hook (30) is performed to make it less aggressive towards the wheel.

11. Device according to anyone of the preceding claims, wherein said hook (30) comprises two flat hook legs or two hook legs with an S-shape according to said transversal direction (D), each leg comprising:
- said proximal hook portion (P₁), with respect to the handle (28), configured to hook over a handrail (34) associated to said wheelchair wheel, and
- said distal hook portion (P₂), with respect to the handle (28), configured to hook under the wheel rim (36) of said wheelchair wheel.

12. Device according to claim 11, wherein said two hook legs are inclined with respect to each other to follow substantially the curvature of the wheelchair wheel, the value of the angle between the extremities of the two legs in relation to the centre of the wheelchair wheel being substantially comprised between 140° and 160°.

13. Device according to claim 11 or 12, wherein each of said two hook legs presents a width, according to the longitudinal direction (L), substantially equal to 15 mm.

14. Passenger vehicle (16) **characterized in that** it comprises at least one device (10) for immobilizing a wheelchair (12) next to a seat (14) of said passenger vehicle (16) according to anyone of the preceding claims.
